## Europäisches Patentamt

## European Patent Office

## Office européen des brevets

(19)

(11) Veröffentlichungsnummer: **0 250 783**
**B1**

(12) **EUROPÄISCHE PATENTSCHRIFT**

(45) Veröffentlichungstag der Patentschrift:
27.09.89

(51) Int. Cl.⁴: **F16B 13/02**

(21) Anmeldenummer: **87106603.1**

(22) Anmeldetag: **07.05.87**

(54) Spreizdübel.

(30) Priorität: **28.06.86 DE 3621831**

(43) Veröffentlichungstag der Anmeldung:
**07.01.88 Patentblatt 88/1**

(45) Bekanntmachung des Hinweises auf die Patenterteilung:
**27.09.89 Patentblatt 89/39**

(84) Benannte Vertragsstaaten:
**AT BE CH ES FR GB IT LI NL**

(56) Entgegenhaltungen:
**DE-U- 8 034 588**
**GB-A- 2 007 323**

(73) Patentinhaber: **fischerwerke Artur Fischer GmbH & Co. KG, Weinhalde 14-18,**
**D-7244 Tumlingen/Waldachtal 3(DE)**

(72) Erfinder: **Fischer, Artur, Prof. Dr. h. c., Weinhalde 34,**
**D-7244 Waldachtal 3/Tumlingen(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen über einen Teil seiner Länge kreuzweise geschlitzte Spreizdübel aus Kunststoff mit einer zum vorderen Ende sich verjüngenden Innenbohrung für die Aufnahme einer Befestigungsschraube.

Aus Kunststoff bestehende und in einem zylindrischen Bohrloch durch Eindrehen einer Befestigungsschraube mit Holzschraubengewinde verankerbare Spreizdübel sind hinreichend bekannt. Solche Kunststoffdübel sind allerdings nicht für Deckenbefestigungen geeignet, da durch Rißbildung in der Zugzone eine Bohrlocherweiterung eintreten kann, die bei einem Kunststoffdübel zu einer erheblichen Lastminderung führt. Für die Deckenanwendung kommen daher nur Stahldübel in Frage, die zum Ausgleich solcher Bohrlocherweiterungen entweder nachspreizen können oder durch Formschluß in einem mit einer Hinterschneidung versehenen Bohrloch gehalten sind. Derartige Metallanker bestehen überlicherweise aus mehreren Teilen und sind durch entsprechende Oberflächenbehandlung oder Werkstoffauswahl .gegen Korrosion geschützt. Daraus ergibt sich eine erhebliche Verteuerung von Metallankern gegenüber Kunststoffdübeln.

Der Erfindung liegt daher die Aufgabe zugrunde, einen für die Deckenanwendung geeigneten Kunststoffdübel zu schaffen.

Erfindungsgemäß wird dies dadurch erreicht, daß die Außenkontur des Spreizdübels in Anpassung an ein mit einer V-förmigen Hinterschneidung versehenes Bohrloch einen zylindrischen Abschnitt und daran anschließend im Bereich des vorderen Endes eine konische Erweiterung aufweist, die durch entsprechende Schlitzbreiten auf den Durchmesser des zylindrischen Abschnittes zusammendrückbar ist.

Aufgrund der besonderen Formgestaltung des Dübels paßt sich dieser bereits im ungespreizten Zustand einem zylindrischen-konischen Bohrloch an, das mit Hilfe einer entsprechenden Bohrvorrichtung herstellbar ist. Beim Einführen des erfindungsgemäßen Dübels in das Bohrloch wird die am Dübel angebrachte Erweiterung auf den Durchmesser des zylindrischen Abschnittes des Bohrloches zusammengedrückt. Dies wird dadurch erreicht, daß der Durchmesserunterschied zwischen dem zylindrischen Abschnitt des Dübels und dem Größtmaß seiner Erweiterung etwa der Schlitzbreite entspricht. Sobald die Erweiterung beim Einschieben in das Bohrloch die V-förmige Hinterschneidung erreicht, federn die Spreizsegmente des Dübels wieder zurück und füllen die Hinterschneidung des Bohrloches aus. Durch Eindrehen einer Befestigungsschraube in die sich verjüngende Innenbohrung des Dübels wird zum einen eine Verspannung des Dübels im Bohrloch erreicht, und zum anderen die Spreizsegmente in der Hinterschneidung des Bohrloches abgestützt. Kommt es nunmehr zu einer Bohrlocherweiterung durch Rißbildung, so läßt zwar die Verspannung etwas nach, dennoch erfolgt keine ins Gewicht fallende Abminderung des Haltewertes, da der Formschluß der Erweiterung im hinterschnittenen Teil des Bohrloches voll erhalten bleibt. Der erfindungsgemäße Kunststoffdübel ist somit auch für Deckenbefestigungen geeignet.

In weiterer Ausgestaltung der Erfindung kann der Spreizdübel an seinem zylindrischen Abschnitt Drehsicherungsrippen aufweisen, um im Anfangsstadium der Aufspreizung ein Mitdrehen des Dübels im Bohrloch zu verhindern.

In weiterer Ergänzung der Erfindung kann der Spreizdübel aus einem glasfaserverstärkten Kunststoff hergestellt sein. Ein ständig unter Zugspannung stehender Kunststoffdübel neigt zum relaxieren. Durch eine Glasfaserarmierung des Kunststoffes wird dies weitgehendst vermieden.

In der Zeichnung ist ein Ausführungsbeispiel der Erfindung dargestellt.

Es zeigen:

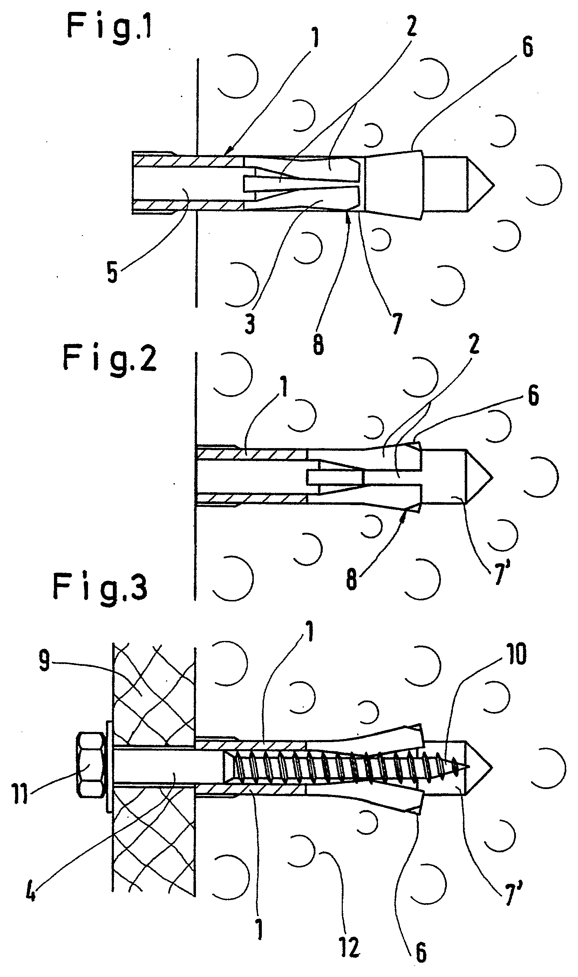

Figur 1 den erfindungsgemäßen Dübel beim Einschieben in das mit einer Hinterschneidung versehene Bohrloch,
Figur 2 den im Bohrloch eingesetzten Dübel,
Figur 3 die Befestigung eines Gegenstandes mit dem Spreizdübel.

Der aus Kunststoff bestehende Spreizdübel 1 ist von seinem vorderen Ende ausgehend über einen Teil seiner Länge mit zwei sich kreuzenden Schlitzen 2 versehen, so daß vier Spreizsegmente 3 entstehen. Zum Eindrehen einer Befestigungsschraube 4 weist der Dübel eine Innenbohrung 5 auf, die sich zum vorderen Ende hin verjüngt. Die Außenkontur des Spreizdübels ist in Anpassung an das mit einer V-förmigen Hinterschneidung 6 versehene Bohrloch 7 mit einem zylindrischen Abschnitt versehen, an den sich eine konische Erweiterung 8 anschließt. Beim Einschieben des Dübels in das Bohrloch 7 wird diese Erweiterung 8 auf den Durchmesser des zylindrischen Abschnittes des Bohrloches zusammengedrückt, was durch entsprechende Schlitzbreiten ermöglicht wird. Sobald die Erweiterung 8 die Hinterschneidung 6 des Bohrloches 7 erreicht, federn die Spreizsegmente 3 in ihre ursprüngliche, die Hinterschneidung ausfüllende Lage zurück. Die Position der Hinterschneidung 6 im Bohrloch ist auf die Länge des Dübels und die Position der Erweiterung 8 so abgestimmt, daß bei einem bündigen Abschluß des hinteren Dübelendes mit der Wandoberfläche der richtige Sitz des Dübels im Bohrloch erreicht ist.

Zur Verspreizung des Dübels 1 im Bohrloch und zur Befestigung eines Gegenstandes 9 wird durch den zu befestigenden Gegenstand hindurch in den Dübel eine Befestigungsschraube 4 mit Holzschraubengewinde eingedreht. Um auf der ganzen Länge des Dübels eine Verspannung mit dem zylindrischen Teil des Gewindes zu erreichen, ist das Bohrloch 7 im Anschluß an die Hinterschneidung 6 mit einem zylindrischen Bohrlochabschnitt 7 verlängert, so daß die Spitze 10 der Schraube 4 durch den Dübel durchgedreht werden kann. Mit dem Kopf der Befestigungsschraube 11 wird der zu befestigende Gegenstand 9 gegen die Oberfläche der Wand 12 verspannt.

**Patentansprüche**

1. Über einen Teil seiner Länge kreuzweise geschlitzter Spreizdübel aus Kunststoff mit einer zum vorderen Ende sich verjüngenden Innenbohrung für die Aufnahme einer Befestigungsschraube, dadurch gekennzeichnet, daß die Außenkontur des Spreizdübels in Anpassung an ein mit einer V-förmigen Hinterschneidung versehenes Bohrloch einen zylindrischen Abschnitt und daran anschließend im Bereich des vorderen Endes eine konische Erweiterung aufweist, die durch entsprechende Schlitzbreiten auf den Durchmesser des zylindrischen Abschnittes zusammendrückbar ist.

2. Spreizdübel nach Anspruch 1, dadurch gekennzeichnet, daß der Spreizdübel an seinem zylindrischen Abschnitt Drehsicherungsrippen aufweist.

3. Spreizdübel nach Anspruch 1, dadurch gekennzeichnet, daß der Spreizdübel aus einem glasfaserverstärkten Kunststoff hergestellt ist.

**Claims**

1. Expansible fixing plug of plastics material which is slit transversely for a part of its length, the fixing plug having an internal bore tapering towards the front end for receiving a fastening screw, characterised in that, to match a bored hole provided with a V-shaped undercut, the external contour of the expansible fixing plug has a cylindrical portion and, following thereon in the region of the front end, a flared enlargement which is compressible to the diameter of the cylindrical portion by virtue of suitable widths of slit.

2. Expansible fixing plug according to claim 1, characterised in that the expansible fixing plug has anti-rotation ribs on its cylindrical portion.

3. Expansible fixing plug according to claim 1, characterised in that the expansible fixing plug is manufactured from a glass fibre reinforced plastics material.

**Revendications**

1. Cheville expansible en matière plastique, fendue en croix sur une partie de sa longueur et comportant une ouverture intérieure qui se rétrécit vers l'avant et qui est destinée à loger une vis de fixation, cheville caractérisée en ce que, pour s'adapter à un trou comportant un chambrage en V, la cheville présente, sur son contour extérieur, un tronçon cylindrique auquel se raccorde, à l'extrémité antérieure, une partie élargie conique, qui peut être comprimée au diamètre de ce tronçon cylindrique grâce à une largeur correspondante donnée aux fentes.

2. Cheville expansible selon la revendication 1, caractérisée en ce qu'elle comporte, sur son tronçon cylindrique, des nervures destinées à l'empêcher d'être entraînée en rotation.

3. Cheville selon la revendication 1, caractérisée en ce qu'elle est composée d'une matière plastique renforcée par des fibres de verre.

Fig.1

Fig.2

Fig.3